# EUROPEAN PATENT APPLICATION

(11) **EP 4 750 141 A1**
(43) Date of publication of application: **27.05.2026**
(21) Application number: 23945499.4
(22) Date of filing: 20.07.2023
(51) Int. Cl.: H04W 28/04, H04L 1/1607, H04L 1/1867

(54) **INFORMATION PROCESSING METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2023/108443
(87) International publication number: WO 2025/015611

(57) **Abstract**

The present disclosure relates to an information processing method, a terminal, a network device, and a storage medium. The information processing method comprises: receiving first information, wherein the first information is used for indicating the number of repeated transmissions on a first channel, and the first channel comprises a common physical downlink control channel. In the embodiments, an information processing method is provided. A terminal determines the number of repeated transmissions on a common physical downlink control channel by means of received first information, thereby ensuring multiple detections of information transmitted on the common physical downlink control channel, and ensuring the transmission reliability of the common physical downlink control channel due to multiple repeated transmissions.

## Description

### TECHNICAL FIELD

The present disclosure relates to the field of communication technology, and in particular to an information processing method, a terminal, a network device, and a storage medium.

### BACKGROUND

With the rapid development of mobile communication technology, a communication method has been provided for NTN (non-terrestrial network) scenarios. Specifically, the terminal performs random access to the network device through a satellite system, and the network device transmits data, with the terminal through a physical channel.

### SUMMARY

Consider how to improve the reliability of transmission over the common physical downlink control channel.

Embodiments of the present disclosure provide an information processing method, a terminal, a network device, and a storage medium.

According to a first aspect of the present disclosure, an information processing method is proposed, the method including:
receiving first information, the first information being used to indicate a number of repetitions of a first channel, where the first channel includes a common physical downlink control channel.

According to a second aspect of the embodiments of this disclosure, an information processing method is provided, the method including:
sending first information, the first information being used to indicate a number of repetitions of a first channel, where the first channel includes a common physical downlink control channel.

According to a third aspect of the embodiments of this disclosure, an information processing method is proposed, the method including:
sending, by a network device, first information, the first information being used to indicate a number of repetitions of a first channel, where the first channel includes a common physical downlink control channel; and
receiving, by a terminal, the first information.

According to a fourth aspect of the embodiments of this disclosure, a terminal is provided, including:
a transceiver module, configured to receive first information, the first information being used to indicate a number of repetitions of a first channel, where the first channel includes a common physical downlink control channel.

According to a fifth aspect of the embodiments of this disclosure, a network device is provided, including:
a transceiver module, configured to send first information, the first information being used to indicate a number of repetitions of a first channel, where the first channel includes a common physical downlink control channel.

According to a sixth aspect of the embodiments of this disclosure, a terminal is provided, including:
one or more processors;
where the terminal is configured to execute any of the methods described in the first aspect.

According to a seventh aspect of the present disclosure, a network device is provided, including:
one or more processors;
where the network device is configured to execute any of the methods described in the second aspect.

According to an eighth aspect of the embodiments of this disclosure, a communication system is provided, including:
a terminal and a network device, where the terminal is configured to implement the information processing method described in the first aspect, and the network device is configured to implement the information processing method described in the second aspect.

According to a ninth aspect of the present disclosure, a storage medium is provided that stores instructions which, when executed on a communication device, cause the communication device to perform the method as described in any one of the first or second aspects.

### BRIEF DESCRIPTION OF THE DRAWINGS

The accompanying drawings, described herein, are provided to further illustrate the disclosed embodiments and form a part of this disclosure. The illustrative embodiments and their descriptions of the embodiments of the present disclosure are used to explain the embodiments of the present disclosure, and do not constitute an undue limitation on the embodiments of the present disclosure. In the drawings:
FIG. 1 is a schematic diagram of a communication system architecture provided in an embodiment of this disclosure;
FIG. 2 is an interactive schematic diagram of an information processing method provided in an embodiment of this disclosure;
FIG. 3A is a flowchart of an information processing method provided in an embodiment of this disclosure;
FIG. 3B is a flowchart of an information processing method provided in an embodiment of this disclosure;
FIG. 3C is a flowchart of an information processing method provided in an embodiment of this disclosure;
FIG. 4A is a flowchart of an information processing method provided in an embodiment of this disclosure;
FIG. 4B is a flowchart of an information processing method provided in an embodiment of this disclosure;
FIG. 5 is an interactive schematic diagram of an information processing method according to an embodiment of this disclosure;
FIG. 6 is an interactive schematic diagram of an information processing method according to an embodiment of this disclosure;
FIG. 7A is a schematic diagram of the structure of a terminal according to an embodiment of the present disclosure;
FIG. 7B is a schematic diagram of the structure of a network device according to an embodiment of the present disclosure;
FIG. 8A is a schematic diagram of a communication device according to an embodiment of the present disclosure; and
FIG. 8B is a schematic diagram of a communication device according to an embodiment of the present disclosure.

### DETAILED DESCRIPTION

This disclosure provides an information processing method, a terminal, and a storage medium.

In a first aspect, embodiments of this disclosure provide an information processing method, the method including:
receiving first information, the first information being used to indicate a number of repetitions of a first channel, where the first channel includes a common physical downlink control channel.

In the above embodiments, an information processing method is provided, in which the terminal determines the number of repetitions of the common physical downlink control channel by receiving the first information, ensuring that the information transmitted by the common physical downlink control channel is detected multiple times. Due to the multiple repetitions, the reliability of the transmission of the common physical downlink control channel is guaranteed.

In conjunction with some embodiments of the first aspect, in some embodiments, the first information includes a first parameter, the first parameter indicating the number of repetitions of the first channel.

In the above embodiments, the number of times the first channel is to be repeatedly transmitted is indicated by indicating a repetition parameter, thereby ensuring the accuracy of the indicated number of times of the repetitions of the first channel and improving the reliability of the transmission of the first channel.

In conjunction with some embodiments of the first aspect, in some embodiments, the first information includes a second parameter, the second parameter indicating whether the first channel is enabled for repetitions, and the number of repetitions of the first channel is predefined.

In the above embodiments, the second parameter indicates whether to enable the first channel to perform a predefined number of repetitions, ensuring the accuracy of the indicated number of repetitions of the first channel, thereby improving the reliability of transmission of the first channel.

In conjunction with some embodiments of the first aspect, in some embodiments, the method further includes:
a terminal having no valid second channel, receiving the first channel or receiving second information carried on the first channel based on the number of repetitions of the first channel.

In the above embodiments, if the terminal does not have a valid second channel, the terminal receives information from the network device based on the first channel. In order to ensure the accuracy of the information, the terminal receives the second information carried on the first channel based on the number of repetitions of the first channel, thereby ensuring the accuracy of receiving the second information and thus ensuring the reliability of the transmission through the first channel.

In conjunction with some embodiments of the first aspect, in some embodiments, the method further includes:
the terminal having no valid second channel, and the terminal supporting repetitions of the first channel, receiving the first channel, or receiving second information carried on the first channel based on the number of repetitions of the first channel.

In the above embodiments, if the terminal does not have a valid second channel and the terminal supports repetitions of the first channel, the terminal receives information from the network device based on the first channel. In order to ensure the accuracy of the information, the terminal receives the second information carried on the first channel based on the number of repetitions of the first channel, thereby ensuring the accuracy of receiving the second information and thus ensuring the reliability of the transmission through the first channel.

In conjunction with some embodiments of the first aspect, in some embodiments, the method further includes:
the terminal having no valid second channel, and the terminal requesting repetitions of the first channel, receiving the first channel, or receiving second information carried on the first channel based on the number of repetitions of the first channel.

In the above embodiments, if the terminal does not have a valid second channel and the terminal requests repetitions of the first channel, then the repetitions of the first channel are required. Therefore, based on the number of repetitions of the first channel, the terminal receives the first channel or receives the second information carried on the first channel to ensure the accuracy of receiving the second information, thereby ensuring the reliability of the first channel transmission.

In conjunction with some embodiments of the first aspect, in some embodiments, the second information includes at least one of the following:
a downlink control information (DCI) scrambled by random access radio network temporary identity (RA-RNTI);
a DCI scrambled by temporary cell radio network temporary identity (TC-RNTI);
a DCI scrambled by RNTI in two-step random access (msgB-RNTI);
a DCI scrambled by cell access radio network temporary identity (C-RNTI).

In the above embodiments, different types of second information can be transmitted through repeated transmission of the first channel to ensure the reliability of the transmission of the second information.

In conjunction with some embodiments of the first aspect, in some embodiments, the second channel is a dedicated PDCCH (Physical Downlink Control Channel).

In conjunction with some embodiments of the first aspect, in some embodiments, the first channel is configured via the PDCCH-Configcommon field in the RRC (Radio Resource Control) information.

In conjunction with some embodiments of the first aspect, in some embodiments, the second channel is configured via the PDCCH-Config field in the RRC information.

In conjunction with some embodiments of the first aspect, in some embodiments, the first information is carried in a SIB (System Information Block).

In the above embodiments, the reliability of repeated transmissions of the first channel is ensured by using SIB to indicate the number of repetitions of the first channel.

In conjunction with some embodiments of the first aspect, in some embodiments, the time-domain resources for the repetitions of the first channel are a first number of continuous slots, and wherein the first number is the same as the number of repetitions of the first channel;
and/or,
the repetitions of the first channel are transmitted on a plurality of slots, and each repetition of the first channel occupies the same time-domain resources in each slot of the plurality of slots.

In the above embodiments, when the first channel performs repeated transmissions, different methods can be used to determine the time-domain resources occupied, ensuring the accuracy of the determined time-domain resources, and thus ensuring the reliability of repetitions of the first channel.

In conjunction with some embodiments of the first aspect, in some embodiments, the terminal does not have a valid second channel, and receives the first channel or receives second information carried on the first channel in N consecutive slots based on the number of repetitions of the first channel, where N is the number of repetitions, and the first channel occupies each of the N consecutive slots.

In conjunction with some embodiments of the first aspect, in some embodiments, the terminal does not have a valid second channel, and receives the first channel or receives second information carried on the first channel in N consecutive slots based on the number of repetitions of the first channel, where N is the number of repetitions, and the first channel occupies the same time-domain resources in each of the N consecutive slots.

In conjunction with some embodiments of the first aspect, in some embodiments, the first channel carries third information, the third information being used to indicate a time offset value, the time offset value indicating a time interval between a time unit at which a last transmission of the repetition of the first channel received by a terminal ends and a time unit at which a third channel begins.

In conjunction with some embodiments of the first aspect, in some embodiments, the second information includes third information, which is used to indicate a time offset value, the time offset value indicating a time interval between a time unit at which a last transmission of the repetition of the first channel received by a terminal ends and a time unit at which a third channel begins.

In the above embodiments, the first channel further includes a time offset value, which indicates the time interval between the end of the last repetition of the first channel and the start time of the third channel, thereby improving the reliability of the terminal in performing repeated transmissions.

In conjunction with some embodiments of the first aspect, in some embodiments, a fourth information is sent, the fourth information being used to indicate that the terminal supports repetitions of the first channel.

In the above embodiments, the terminal reports its ability to support repetitions of the first channel through the fourth information, thereby improving the accuracy of the terminal reporting capability and ensuring the reliability of repetitions of the first channel.

In conjunction with some embodiments of the first aspect, in some embodiments, the fourth information is a PRACH (Physical Random Access Channel) channel, which is used to carry a preamble. When the terminal sends a specific preamble sequence, it indicates that the terminal has the ability to support repetitions of the first channel.

In conjunction with some embodiments of the first aspect, in some embodiments, the fourth information is a PRACH channel, which is used to carry a preamble. When the terminal sends a preamble on specific time and/or frequency resources, it indicates that the terminal has the ability to support repetitions of the first channel.

In conjunction with some embodiments of the first aspect, in some embodiments, a fifth message is sent, the fifth message being used to indicate that the terminal requests repetitions of the first channel.

In the above embodiments, the terminal requests repetitions of the first channel through the fifth information to ensure the reliability of repetitions of the first channel.

In conjunction with some embodiments of the first aspect, in some embodiments, the fifth information is a PRACH (Physical Random Access Channel) channel, which is used to carry a preamble. When the terminal sends a specific preamble sequence, it indicates that the terminal requests repetitions of the first channel.

In conjunction with some embodiments of the first aspect, in some embodiments, the fifth information is a PRACH channel, which is used to carry a preamble. When the terminal sends a preamble on a specific time and/or frequency resource, it indicates that the terminal requests repetitions of the first channel.

In conjunction with some embodiments of the first aspect, in some embodiments, the first channel is a common PDCCH, and/or the first channel is a common PDSCH.

In a second aspect, embodiments of this disclosure provide an information processing method, the method including:
sending first information, the first information being used to indicate a number of repetitions of a first channel, wherein the first channel includes a common physical downlink control channel.

In conjunction with some embodiments of the first aspect, in some embodiments, the first information includes a first parameter, the first parameter indicating the number of repetitions of the first channel.

In conjunction with some embodiments of the first aspect, in some embodiments, the first information includes a second parameter, the second parameter indicating whether the first channel is enabled for repetitions, and the number of repetitions of the first channel is predefined.

In conjunction with some embodiments of the first aspect, in some embodiments, the method further includes:
a terminal having no valid second channel, sending the first channel or sending second information carried on the first channel based on the number of repetitions of the first channel.

In conjunction with some embodiments of the first aspect, in some embodiments, the method further includes:
the terminal having no valid second channel, and the terminal supporting repetitions of the first channel, sending the first channel or sending second information carried on the first channel based on the number of repetitions of the first channel.

In conjunction with some embodiments of the first aspect, the method further includes:
the terminal having no valid second channel, and the terminal requesting for repetitions of the first channel, sending the first channel or sending second information carried on the first channel based on the number of repetitions of the first channel.

In conjunction with some embodiments of the first aspect, in some embodiments, the second information includes at least one of the following:
a DCI scrambled by RA-RNTI;
a DCI scrambled by TC-RNTI;
a DCI scrambled by msgB-RNTI;
a DCI scrambled by C-RNTI.

In conjunction with some embodiments of the first aspect, in some embodiments, the second channel is a dedicated physical downlink control channel (PDCCH).

In conjunction with some embodiments of the first aspect, in some embodiments, the first channel is configured via the PDCCH-Configcommon field in the RRC (Radio Resource Control) information.

In conjunction with some embodiments of the first aspect, in some embodiments, the second channel is configured via the PDCCH-Config field in the RRC information.

In conjunction with some embodiments of the first aspect, in some embodiments, the first information is carried in a system information block (SIB).

In conjunction with some embodiments of the first aspect, in some embodiments, the time-domain resources for the repetitions of the first channel are first number of continuous slots, and wherein the first number is same as the number of repetitions of the first channel;
and/or,
the repetitions of the first channel are transmitted on a plurality of slots, and each repetition of the first channel occupies same time-domain resources in each slot of the plurality of slots.

In conjunction with some embodiments of the first aspect, in some embodiments, the terminal does not have a valid second channel, and receives the first channel or receives second information carried on the first channel in N consecutive slots based on the number of repetitions of the first channel, where N is the number of repetitions, and the first channel occupies each of the N consecutive slots.

In conjunction with some embodiments of the first aspect, in some embodiments, the terminal does not have a valid second channel, and receives the first channel or receives second information carried on the first channel in N consecutive slots based on the number of repetitions of the first channel, where N is the number of repetitions, and the first channel occupies the same time-domain resources in each of the N consecutive slots.

In conjunction with some embodiments of the first aspect, in some embodiments, the first channel carries third information, the third information being used to indicate a time offset value, the time offset value indicating a time interval between a time unit at which a last transmission of the repetition of the first channel received by a terminal ends and a time unit at which a third channel begins.

In conjunction with some embodiments of the first aspect, in some embodiments, the second information includes third information, which is used to indicate a time offset value, the time offset value indicating a time interval between a time unit at which a last transmission of the repetition of the first channel received by a terminal ends and a time unit at which a third channel begins.

In conjunction with some embodiments of the first aspect, in some embodiments, the method further includes:
receive a fourth information, the fourth information being used to indicate that the terminal supports repetitions of the first channel.

In conjunction with some embodiments of the first aspect, in some embodiments, the fourth information is a PRACH channel, which is used to carry a preamble. When the terminal sends a specific preamble sequence, it indicates that the terminal has the ability to support repetitions of the first channel.

In conjunction with some embodiments of the first aspect, in some embodiments, the fourth information is a PRACH channel, which is used to carry a preamble. When the terminal sends a preamble on specific time and/or frequency resources, it indicates that the terminal has the ability to support repetitions of the first channel.

In conjunction with some embodiments of the first aspect, in some embodiments, the method further includes:
receive a fifth message, the fifth message being used to indicate that the terminal requests for repetitions of the first channel.

In conjunction with some embodiments of the first aspect, in some embodiments, the fifth information is a PRACH channel, which is used to carry a preamble. When the terminal sends a specific preamble sequence, it indicates that the terminal requests repetitions of the first channel.

In conjunction with some embodiments of the first aspect, in some embodiments, the fifth information is a PRACH channel, which is used to carry a preamble. When the terminal sends a preamble on a specific time and/or frequency resource, it indicates that the terminal requests for repetitions of the first channel.

In conjunction with some embodiments of the first aspect, in some embodiments, the first channel is a common PDCCH, and/or the first channel is a common PDSCH.

In a third aspect, embodiments of this disclosure provide an information processing method, the method including:
sending, by a network device, first information, the first information being used to indicate a number of repetitions of a first channel, wherein the first channel includes a common physical downlink control channel; and
receiving, by a terminal, the first information.

In a fourth aspect, embodiments of this disclosure provide a terminal, which includes at least one of a transceiver module and a processing module; wherein the terminal is used to execute optional implementations of the first and third aspects.

In a fifth aspect, embodiments of this disclosure provide a network device, wherein the access network device includes at least one of a transceiver module and a processing module; wherein the access network device is used to execute optional implementations of the second and third aspects.

In a sixth aspect, embodiments of this disclosure provide a terminal, including:
one or more processors;
the terminal is used to execute the method described in any one of the first and third aspects.

In a seventh aspect, embodiments of this disclosure provide a network device, including:
one or more processors;
the network device is used to perform the method described in any one of the second and third aspects.

In an eighth aspect, embodiments of this disclosure provide a storage medium storing first information, which, when executed on a communication device, causes the communication device to perform the method as described in any one of the first, second, and third aspects.

In a ninth aspect, embodiments of this disclosure provide a program product that, when executed by a communication device, causes the communication device to perform the method described in any of the first, second, and third aspects.

In a tenth aspect, embodiments of this disclosure provide a computer program that, when run on a communication device, causes the communication device to perform the methods described in any of the first, second, and third aspects.

In an eleventh aspect, embodiments of this disclosure provide a chip or chip system. The chip or chip system includes processing circuitry configured to perform the methods described in any of the first, second, and third aspects.

It is understood that the aforementioned terminals, storage medium, program products, computer programs, chips, or chip systems are all used to execute the methods proposed in the embodiments of this disclosure. Therefore, the beneficial effects they can achieve can be referred to the beneficial effects in the corresponding methods, and will not be repeated here.

This disclosure provides an information processing method, a terminal, a network device, and a storage medium. In some embodiments, the terms "information processing method and information processing method" and "information processing method" can be used interchangeably, as can the terms "communication device and information processing device" and "communication device", and the terms "information processing system" and "communication system."

The embodiments of the present disclosure are not exhaustive and are merely illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementation methods in a certain embodiment can be arbitrarily combined; in addition, the embodiments can be arbitrarily combined. For example, some or all steps of different embodiments can be arbitrarily combined, and a certain embodiment can be arbitrarily combined with the optional implementation methods of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular, such as "a", "an", "the", "above", "said", "foregoing", "this", etc., may mean "one and only one", "one or more", "at least one", etc. For example, when articles such as "a", "an", or "the" in English are used in translation, the noun following the article may be understood as a singular expression or a plural expression.

In the embodiments of the present disclosure, "plurality" refers to two or more.

In some embodiments, the terms "at least one of", "at least one of", "at least one of", "one or more", "a plurality of", "multiple", etc. can be used interchangeably.

In the embodiments of the present disclosure, descriptions such as "at least one of A and B", "A and/or B", "in one case, A, in another case, B", or "in response to one case, A, in response to another case, B", can include the following technical solutions depending on the situation: in some embodiments, A (executing A independently of B); in some embodiments, B (executing B independently of A); in some embodiments, selecting between A and B (selectively executing A and B); and in some embodiments, A and B (executing both A and B). The above description also applies when there are multiple branches, such as A, B, and C.

In some embodiments, descriptions such as "A or B" can include the following technical solutions depending on the situation: in some embodiments, A (executing A independently of B); in some embodiments, B (executing B independently of A); and in some embodiments, selecting between A and B (selectively executing A and B). The above description also applies when there are multiple branches, such as A, B, and C.

The prefixes "first" and "second" in the embodiments of the present disclosure are only used to distinguish different description objects and do not constitute any restriction on the position, order, priority, quantity, or content of the description objects. For the statement of the description object, please refer to the description in the context of the claims or embodiments, and no unnecessary restriction should be constituted due to the use of prefixes. For example, if the description object is a "field", the ordinal number before the "field" in the "first field" and the "second field" does not limit the position or order between the "fields". "First" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number and can be one or more. Taking "first device" as an example, the number of "devices" can be one or more. In addition, the objects modified by different prefixes can be the same or different. For example, if the description object is "device", then the "first device " and the "second device" can be the same device or different devices, and their types can be the same or different; for another example, if the description object is "information", then the "first information" and the "second information" can be the same information or different information, and their contents can be the same or different.

In some embodiments, "including A", "comprising A", "for indicating A", and "carrying A" can be interpreted as directly carrying A or indirectly indicating A.

In some embodiments, terms such as "in response to ...", "in response to determining ...", "in the case of ...", "at the time of ...", "when . . ", "if ...", "provided ...", etc. can be used interchangeably.

In some embodiments, terms such as "greater than", "greater than or equal to", "not smaller than", "more than", "more than or equal to", "not less than", "higher than", "higher than or equal to", "not lower than", and "above" can be replaced with each other, and terms such as "smaller than", "smaller than or equal to", "not greater than", "less than", "less than or equal to", "not more than", "lower than", "lower than or equal to", "not higher than", and "below" can be replaced with each other.

In some embodiments, devices and apparatus can be interpreted as physical or virtual, and their names are not limited to the names described in the embodiments, and in some cases it can be interpreted as "apparatus", "equipment", "device", "circuit", "network element", "node", "function", "unit", "section", "system", "network", "chip", "chip system", "entity", and "subject", and the like.

In some embodiments, "network" may be interpreted as the devices included in the network, such as an access network device, a core network device, etc.

In some embodiments, "access network device (AN device)" may also be referred to as "radio access network device (RAN device)", "base station (BS)", "radio base station", "fixed station", and in some embodiment it can also be interpreted as "node", "access point", "transmission point (TP)", "reception point (RP)", "transmission and/or reception point (TRP)", "panel", "antenna panel", "antenna array", "cell", "macro cell", "small cell", "femto cell", "pico cell", "sector", "cell group", "serving cell", "carrier", "component carrier" and "bandwidth part (BWP)", and the like.

In some embodiments, "terminal" or "terminal device" may be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like.

In some embodiments, obtaining data, information, etc., may comply with the laws and regulations of the country where the data is obtained.

In some embodiments, data, information, etc., may be obtained with the user's consent.

In addition, each element, each row, or each column in the table of the embodiment of the present disclosure can be implemented as an independent embodiment, and the combination of any elements, any rows, and any columns can also be implemented as an independent embodiment.

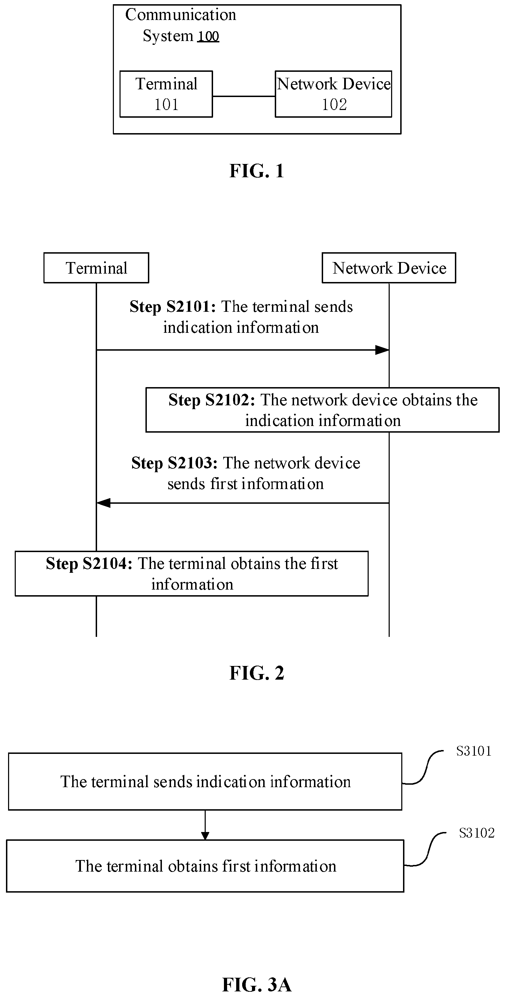

FIG. 1 is a schematic diagram showing a communication system architecture according to an embodiment of the present disclosure. As shown in FIG. 1, the method provided in this embodiment can be applied to a communication system 100, which may include a terminal 101 and a network device 102. It should be noted that the communication system 100 may also include other devices, and the present disclosure does not limit the devices included in the communication system 100.

In some embodiments, the terminal 101 includes for example, but is not limited to, at least one of the following: mobile phone, wearable device, Internet of Things device, car with communication function, smart car, tablet computer (Pad), computer with wireless transceiver function, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home.

In some embodiments, the network device 102 may include at least one of an access network device and a core network device.

In some embodiments, the access network device is, for example, a node or device that accesses a terminal to a wireless network. The access network device may include an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and at least one of an access node in a Wi-Fi system, but is not limited thereto.

In some embodiments, the core network device may be a single device including one or more network elements, or may be multiple devices or device groups, each including all or part of the aforementioned one or more network elements. The network elements may be virtual or physical. The core network may include, for example, at least one of an evolved packet core (EPC), a 5G core network (5GCN), or a next-generation core (NGC).

In some embodiments, the access network device may be formed of a centralized unit (CU) and a distributed unit (DU), where the CU may also be referred to as a control unit. A CU-DU structure may be used to separate the protocol layers of the access network device, with some functions of the protocol layers centrally controlled by the CU and some or all functions of the remaining protocol layers distributed in the DU, which is centrally controlled by the CU, but is not limited thereto.

In some embodiments, the core network device may be a single device including one or more network elements, or may be multiple devices or device groups, each including all or part of the aforementioned one or more network elements. The network elements may be virtual or physical. The core network may include, for example, at least one of an evolved packet core (EPC), a 5G core network (5GCN), or a next-generation core (NGC).

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. Those of ordinary skill in the art can know that with the evolution of the system architecture and the emergence of new service scenarios, the technical solution provided by the embodiment of the present disclosure is also applicable to similar technical problems.

The following embodiments of the present disclosure may be applied to the communication system 100 shown in FIG. 1, or a portion thereof, but are not limited thereto. The entities shown in FIG. 1 are illustrative only. The communication system may include all or a portion of the entities shown in FIG. 1, or may include other entities other than those shown in FIG. 1. The number and configuration of the entities may be arbitrary. The entities may be virtual or physical. The connections between the entities are illustrative only. The entities may be connected or disconnected, and the connections may be in any manner, including direct or indirect, wired or wireless.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New Radio Access Technology (RAT), New Radio (NR), New Radio Access (NX), Future Generation Radio Access (FX), Global System for Mobile communications (GSM^{®}), CDMA2000, Ultra Mobile Broadband (UMB), and the like. These standards include IEEE 802.11 (Wi-Fi^{®}), IEEE 802.16 (WiMAX^{®}), IEEE 802.20, ultra-wideband (UWB), Bluetooth^{®}, public land mobile network (PLMN) networks, device-to-device (D2D) systems, machine-to-machine (M2M) systems, Internet of Things (IoT) systems, vehicle-to-everything (V2X), systems utilizing other communication methods, and next-generation systems based on and extending these methods. In addition, a combination of multiple systems (for example, a combination of LTE or LTE-A and 5G, etc.) can also be applied.

In some embodiments, this disclosure is applied to an NTN system in which terminals and network devices communicate via satellite. This NTN system supports multibeam transmission. If multiple beams are transmitted simultaneously, satellite power needs to be distributed across different beams, resulting in reduced power on each beam. Additionally, the satellite antenna size is smaller, leading to a decrease in antenna gain. Furthermore, this disclosure can also be applied to other systems, and the embodiments in this application are not limited thereto.

In some embodiments, the terminal establishes a connection with the network device via random access. Optionally, during the initial access process, after receiving the random access preamble sent by the terminal, the network device sends Msg2 to the terminal. The PDCCH of Msg2 is DCI 1-0 scrambled with RA-RNTI, and schedules the PDSCH of Msg2. The PDSCH includes TC-RNTI, TA command, and UL grant (time-frequency resources of msg3).

In some embodiments, Msg2 uses the common PDCCH and common PDSCH resources.

In some embodiments, the first DCI transmitted on the common PDCCH is the DCI used to schedule SIB1. Since this DCI is the same throughout the cell and appears periodically, the terminal can perform joint demodulation of multiple DCIs, thereby scheduling the SIB1 using soft combining techniques, to achieve repetition and improve reliability.

FIG. 2 is an interactive schematic diagram of an information processing method according to an embodiment of the present disclosure. As shown in FIG. 2, the embodiments of the present disclosure relate to an information processing method, which includes:
**Step S2101:** The terminal sends indication information.

In some embodiments, the network device receives the indication information. Alternatively, it can be understood that the network device receives the indication information sent by the terminal.

In some embodiments, the indication information is used to indicate that the terminal acquires repetitions of the first channel. Alternatively, it can be understood that the indication information indicates that the terminal supports repetitions of the first channel. Alternatively, it can be understood that the indication information indicates that the terminal requests repetitions of the first channel. Alternatively, it can be understood that the indication information is used to inform the network device to configure repetitions of the first channel.

In some embodiments, the name of the indication information is not limited. It may be, for example, capability information, indication signaling, indication identifier, request information, etc.

In some embodiments, the first channel is used for downlink transmission. Alternatively, it can be understood that the first channel is used for transmitting downlink data. Alternatively, it can be understood that the first information is used for transmitting downlink signaling.

In some embodiments, the first channel is a common PDCCH, and/or the first channel is a common PDSCH. That is, the first channel is a common PDCCH. Alternatively, the first channel is a common PDSCH. Alternatively, the first channel is both a common PDCCH and a common PDSCH. Alternatively, the first channel may be other types of channels, which are not limited in the embodiments disclosed herein.

In some embodiments, the name of the first channel is not limited. It may be, for example, a common channel, a transmission channel, a downlink channel, a downlink path, etc.

In some embodiments, the first channel is configured via the PDCCH-Configcommon field in the RRC information.

In some embodiments, the repetition means repeated sending. Alternatively, it can be understood as sending multiple times. Alternatively, it can be understood as multiple transmissions.

In some embodiments, step S2101 can be replaced by: sending, by the terminal, fourth information. In some embodiments, the fourth information is used to indicate that the terminal supports repetitions of the first channel. Alternatively, the above steps can also be understood as the indication information in the above embodiments being the fourth information. In some embodiments, if the terminal reports that it supports repetitions of the first channel, then the network device can subsequently configure repetitions of the first channel for the terminal.

In some embodiments, the fourth information is the PRACH channel, which is used to carry the preamble. When the terminal sends a specific preamble sequence, it indicates that the terminal has the ability to support repetitions of the first channel.

In some embodiments, the fourth information is the PRACH channel, which is used to carry a preamble. When the terminal sends a preamble on specific time and/or frequency resources, it indicates that the terminal has the ability to support repetitions of the first channel.

In some embodiments, the network device receives the fourth information. Alternatively, it can be understood that the network device receives the fourth information sent by the terminal.

In some embodiments, step S2101 can be replaced by the terminal sending fifth information. In some embodiments, the fifth information is used to indicate that the terminal requests repetitions of the first channel. It can also be understood that the indication information in the above embodiments is the fifth information. In some embodiments, if the terminal reports a request for repetitions of the first channel, the network device can subsequently configure repetitions of the first channel for the terminal.

In some embodiments, the fifth information is the PRACH channel, which is used to carry the preamble. When the terminal sends a specific preamble sequence, it indicates that the terminal requests repetitions of the first channel.

In some embodiments, the fifth information is the PRACH channel, which is used to carry a preamble. When the terminal sends a preamble on a specific time and/or frequency resource, it indicates that the terminal requests repetitions of the first channel.

In some embodiments, the network device receives the fifth information. Alternatively, it can be understood as the network device receiving the fifth information sent by the terminal.

**Step S2102:** The network device obtains the indication information.

In some embodiments, obtaining the indication information by the network device means receiving indication information. In some embodiments, obtaining the indication information by the network device means receiving the indication information sent by a terminal. In some embodiments, the network device may also obtain the indication information in other ways, which are not limited herein. In some embodiments, correspondingly, the terminal sends the indication information. Alternatively, it can be understood that the terminal sends the indication information to the network device.

In some embodiments, the network device receives fourth information. In some embodiments, the fourth information is used to indicate that the terminal supports repetitions of the first channel. In some embodiments, the indication information in the above embodiments is the fourth information.

In some embodiments, fifth information is received. In some embodiments, the fifth information is used to indicate that the terminal requests repetitions of the first channel. In some embodiments, the indication information in the above embodiments is the fifth information.

**Step S2103:** The network device sends the first information.

In some embodiments, the terminal receives the first information. Alternatively, it can be understood that the terminal receives the first information sent by the network device.

In some embodiments, the first information is used to indicate the number of repetitions of the first channel. In some embodiments, the first information is used to indicate the number of repeated sendings of the first channel. Alternatively, it can also be understood as the first information being used to indicate the number of times of multiple sending of the first channel. Alternatively, it can also be understood as the first information being used to indicate the number of times of multiple transmissions of the first channel.

In some embodiments, the number of repetitions may also be referred to as the repetition factor, repetition count, etc., which are not limited in the embodiments disclosed herein.

In some embodiments, the name of the first information is not limited. It may be, for example, a first instruction information, a first command, a first instruction command, etc.

In some embodiments, the first channel includes a common physical downlink control channel (common PDCCH) and/or a common physical downlink shared channel (common PDSCH).

**Step S2104:** The terminal obtains the first information.

In some embodiments, the terminal obtaining the first information means receiving the first information. In some embodiments, the terminal obtaining the first information means the terminal receiving the first information sent by the network device. In some embodiments, the terminal may also obtain the first information through other means, which are not limited herein. In some embodiments, correspondingly, the network device sends the first information. Alternatively, it can be understood as the network device sending the first information to the terminal.

In some embodiments, the first information includes a first parameter, which indicates the number of repetitions of the first channel. In some embodiments, the first parameter is a numerical value, an identifier, or other type, which is not limited in this disclosure. Optionally, if the first parameter is a numerical value, for example, the numerical value is 2, 3, 4, or other values. For example, if the numerical value is 2, it indicates that the first channel performs repeated transmissions 2 times. If the numerical value is 3, it indicates that the first channel performs repeated transmissions 3 times. Optionally, if the first parameter is an identifier, the identifier indicates the number of repetitions of the first channel. Optionally, the terminal stores a correspondence between identifiers and the number of repetitions. For example, if the first parameter is identifier 1, and identifier 1 corresponds to 3 repetitions, it indicates that the first channel performs repeated transmissions 3 times. If the first parameter is identifier 2, and identifier 2 corresponds to 4 repetitions, it indicates that the first channel performs repeated transmissions 4 times.

In some embodiments, the name of the first parameter is not limited. It may be, for example, the first numerical value, the first number, etc.

In some embodiments, the first information includes a second parameter, which indicates whether to enable repetitions of the first channel, and the number of repetitions of the first channel is predefined. Alternatively, it can be understood that the number of repetitions of the first channel is a default value or is agreed upon by the protocol, which is not limited in this embodiment. For example, the number of repetitions of the first channel is 3, 4, 5, or other numbers.

Optionally, the second parameter is 1 bit. If the second parameter is 1, it indicates that the first channel is enabled for repetitions. If the second parameter is 0, it indicates that the first channel is not enabled for repetitions.

In some embodiments, if the terminal does not have a valid second channel, it receives the first channel or receives second information carried on the first channel based on the number of repetitions of the first channel. Optionally, the absence of a valid second channel, or the configuration of a second channel not yet being effective, can both be considered as not having a valid second channel.

Optionally, if the terminal does not have a valid second channel, the terminal detects a number corresponding to the number of repetitions of the first channel, of second information carried on the first channel, based on the number of repetitions of the first channel, thereby receiving the second information. Alternatively, if the terminal does not have a valid second channel, it will detect a number, corresponding to the number of repetitions of the first channel, of first channel, thereby receiving the first channel.

In some embodiments, when the terminal does not have a valid second channel, the network device sends the first channel or sends the second information carried on the first channel based on the number of repetitions of the first channel.

In some embodiments, the terminal has no effective second channel and supports repetitions of the first channel. Based on the number of repetitions of the first channel, the terminal receives the first channel or receives the second information carried on the first channel.

Optionally, if the terminal does not have a valid second channel, and at this time it also needs to determine that the terminal supports repetitions of the first channel, it will detect a number, corresponding to the number of repetitions of the first channel, of second information carried on the first channel, based on the number of repetitions of the first channel, thereby receiving the second information. Alternatively, if the terminal does not have a valid second channel, and at this time it also needs to determine that the terminal supports repetitions of the first channel, it will detect a number, corresponding to the number of repetitions of the first channel, of first channel, thereby receiving the first channel.

In some embodiments, the terminal has no valid second channel and supports repetitions of the first channel. The network device transmits the first channel or transmits the second information carried on the first channel based on the number of repetitions of the first channel.

In some embodiments, the terminal has no valid second channel and requests for repetitions of the first channel. Based on the number of repetitions of the first channel, the terminal receives the first channel or receives the second information carried on the first channel.

Optionally, if the terminal does not have a valid second channel, and at this time it also needs to determine that the terminal requests for repetitions of the first channel, it will detect a number, corresponding to the number of repetitions of the first channel, of second information carried on the first channel, based on the number of repetitions of the first channel, thereby receiving the second information. Alternatively, if the terminal does not have a valid second channel, and at this time it also needs to determine that the terminal requests for repetitions of the first channel, it will detect a number, corresponding to the number of repetitions of the first channel, of first channel, thereby receiving the first channel.

In some embodiments, the terminal has no valid second channel and requests for repetitions of the first channel. The network device transmits the first channel or transmits the second information carried on the first channel based on the number of repetitions of the first channel.

In some embodiments, the second channel is configured via the PDCCH-Config field in the RRC information.

In some embodiments, the second information includes at least one of the following:

### (1) DCI scrambled by RA-RNTI;

In some embodiments, in a 4-step RACH, msg2 is scrambled by RA-RNTI and transmitted through the first channel, meaning the second information may include DCI scrambled by RA-RNTI.

### (2) DCI scrambled by TC-RNTI;

In some embodiments, in a 4-step RACH, msg4 is scrambled by TC-RNTI and transmitted through the first channel, meaning the second information may include DCI scrambled by RA-RNTI.

### (3) DCI scrambled by msgB-RNTI;

### (4) DCI scrambled by C-RNTI.

In some embodiments, in a 2-step RACH, the terminal sends msgA and the network device sends msgB. Here, msgB may be scrambled by C-RNTI or msgB-RNTI. If it is C-RNTI scrambled, it indicates successful reception; if it is msgB-RNTI scrambled, it indicates a fallback to 4-step RACH.

In some embodiments, the second channel is a dedicated PDCCH.

In some embodiments, the first information is carried in the SIB. In some embodiments, the first information may also be carried in the MAC CE, DCI, or other messages, which are not limited in this disclosure.

In some embodiments, the time-domain resources for repetitions of the first channel are a first number of consecutive slots, the first number being the same as the number of repetitions of the first channel; and/or, the repetitions of the first channel are transmitted on multiple slots, and each repetition of the first channel occupies the same time-domain resources in each of the multiple slots.

Optionally, the above embodiments can be understood as follows: the time-domain resources for repetitions of the first channel are a first number of consecutive slots, the first number being the same as the number of repetitions of the first channel. Alternatively, the repetitions of the first channel are transmitted on multiple slots, and each repetition of the first channel occupies the same time-domain resources in each of the multiple slots. Alternatively, the time-domain resources for repetitions of the first channel are a first number of consecutive slots, the first number being the same as the number of repetitions of the first channel, and the repetitions of the first channel are transmitted on multiple slots, and each repetition of the first channel occupies the same time-domain resources in each of the multiple slots.

In some embodiments of this disclosure, the time-domain resource is a symbol or other resource, which is not limited by this disclosure.

In some embodiments, the terminal does not have a valid second channel and receives the first channel or receives second information carried on the first channel in N consecutive slots based on the number of repetitions of the first channel, where N is the number of repeated transmissions and the first channel occupies each of the N consecutive slots.

For example, the terminal does not have a valid second channel, and receives the first channel or receives second information carried on the first channel in 4 consecutive slots based on the number of repetitions of the first channel. In other words, the number of repetitions of the first channel is 4, and the first channel occupies each of the 4 slots. Alternatively, it can be understood that each slot is completely occupied by the first channel.

In some embodiments, the terminal does not have a valid second channel, and receives the first channel or receives second information carried on the first channel in N consecutive slots based on the number of repetitions of the first channel, where N is the number of repeated transmissions and the first channel occupies the same time-domain resources in each of the N consecutive slots.

For example, the terminal does not have a valid second channel, and receives the first channel or receives second information carried on the first channel in 4 consecutive slots based on the number of repetitions of the first channel. In other words, the number of repetitions of the first channel is 4, and the first channel occupies the same time-domain resources in each of the 4 slots. Alternatively, it can be understood that each slot is completely occupied by the first channel. Alternatively, it can be understood that the first channel occupies the first half of the time-domain resources in each of the 4 slots. For another example, each slot includes 14 symbols, and the first channel occupies the first 8 symbols in each of the 4 slots.

In some embodiments, the first channel carries third information, which is used to indicate a time offset value. The time offset value indicates the time interval between the time unit at which the last transmission of the repetition of the first channel received by a terminal ends and the time unit at which a third channel begins.

Optionally, the time unit can be a slot, a symbol, etc., which is not limited by this disclosure.

In some embodiments, the second information includes the third information, which is used to indicate the time offset value. The time offset value indicates the time interval, the time unit at which the last transmission of the repetition of the first channel received by a terminal ends, and the time unit at which the third channel begins.

Optionally, the second information is a DCI. The DCI includes the third information, which is used to indicate the time offset value. Optionally, the time offset value is a field in the DCI.

In some embodiments, the third channel is a PDSCH. Optionally, the PDSCH includes a PDSCH scheduled by a DCI scrambled by RA-RNTI, i.e., msg2 PDSCH. Optionally, the PDSCH includes a PDSCH scheduled by a DCI scrambled by TC-RNTI, i.e., msg4 PDSCH. Optionally, the PDSCH includes a PDSCH scheduled by a DCI scrambled by msgB-RNTI, i.e., msgB PDSCH. Optionally, the PDSCH includes a PDSCH scheduled by a DCI scrambled by C-RNTI.

In some embodiments, the names of information, etc., are not limited to the names described in the embodiments. Terms such as "information", "message", "signal", "signaling", "report", "configuration", " indication", " instruction ", "command", "channel", "parameter", "domain", "field", "symbol", "symbol", "codebook", "codeword", "codepoint", "bit", "data", "program", and "chip" can be used interchangeably.

In some embodiments, "get", "obtain", "receive", "transmit", "bidirectional transmission", and "send and/or receive" can be used interchangeably and can be interpreted as receiving from other entities, obtaining from protocols, obtaining from higher layers, obtaining through self-processing, or autonomous implementation, among other meanings.

In some embodiments, terms such as "send", "transmit", "report", "distribute", "transfer", "bidirectional transmission", and "send and/or receive" can be used interchangeably.

In some embodiments, terms such as "moment", "point in time", "time", and "time location" can be used interchangeably, as can terms such as "duration", "segment", "time window", "window", and "time."

In some embodiments, terms such as "certain", "preset", "default", "set", "indicated", "a certain", "any", and "first" can be used interchangeably. "Certain A", "preset A", "default A", "set A", "indicated A", "a certain A", "any A", and "first A" can be interpreted as A pre-defined in a protocol or the like, or as A obtained through setting, configuration, or instruction, or as specific A, a certain A, any A, or first A, but are not limited thereto.

The information processing method involved in the embodiments of this disclosure may include at least one of steps S2101 to S2104. For example, step S2101 can be implemented as an independent embodiment, step S2102 can be implemented as an independent embodiment, step S2103 can be implemented as an independent embodiment, step S2104 can be implemented as an independent embodiment, steps S2101 and S2102 can be implemented as an independent embodiment, steps S2101 and S2103 can be implemented as an independent embodiment, steps S2101 and S2104 can be implemented as an independent embodiment, steps S2102 and S2103 can be implemented as an independent embodiment, steps S2102 and S2104 can be implemented as an independent embodiment, steps S2103 and S2104 can be implemented as an independent embodiment, steps S2101, S2102 and S2103 can be implemented as an independent embodiment, steps S2101, S2102 and S2104 can be implemented as an independent embodiment, and steps S2102, S2103 and S2104 can be implemented as an independent embodiment, but are not limited thereto.

In some embodiments, steps S2101, S2102, and S2103 are optional, and one or more of these steps may be omitted or substituted in different embodiments.

In some embodiments, steps S2101, S2102, and S2104 are optional, and one or more of these steps may be omitted or substituted in different embodiments.

In some embodiments, steps S2102, S2103, and S2104 are optional, and one or more of these steps may be omitted or substituted in different embodiments.

In some embodiments, steps S2101 and S2102 are optional, and one or more of these steps may be omitted or substituted in different embodiments.

In some embodiments, steps S2101 and S2103 are optional, and one or more of these steps may be omitted or substituted in different embodiments.

In some embodiments, steps S2101 and S2104 are optional, and one or more of these steps may be omitted or substituted in different embodiments.

In some embodiments, steps S2102 and S2103 are optional, and one or more of these steps may be omitted or substituted in different embodiments.

In some embodiments, steps S2102 and S2104 are optional, and one or more of these steps may be omitted or substituted in different embodiments.

In some embodiments, steps S2103 and S2104 are optional, and one or more of these steps may be omitted or substituted in different embodiments.

In some embodiments, step S2101 is optional, and one or more of these steps may be omitted or substituted in different embodiments.

In some embodiments, step S2102 is optional, and one or more of these steps may be omitted or substituted in different embodiments.

In some embodiments, step S2103 is optional, and one or more of these steps may be omitted or substituted in different embodiments.

In some embodiments, step S2104 is optional, and one or more of these steps may be omitted or substituted in different embodiments.

In different embodiments, one or more of these steps may be omitted or substituted. In some embodiments, reference can be made to other optional implementations described before or after the description corresponding to FIG. 2.

FIG. 3A is a flowchart illustrating an information processing method according to an embodiment of the present disclosure, applied to a terminal. As shown in FIG. 3A, the embodiments of the present disclosure relate to an information processing method, which includes:
**Step S3101:** The terminal sends indication information.

The optional implementation of step S3101 can be found in the optional implementation of step S2101 in FIG. 2 and other related parts in the embodiments involved in FIG. 2, which will not be repeated here.

**Step S3102:** The terminal obtains the first information.

The optional implementation of step S3102 can be found in the optional implementation of step S2104 in FIG. 2 and other related parts in the embodiments involved in FIG. 2, which will not be repeated here.

The information processing method involved in the embodiments of this disclosure may include at least one of steps S3101 to S3102. For example, step S3101 may be implemented as a separate embodiment, and step S3102 may be implemented as a separate embodiment, but is not limited thereto.

In some embodiments, step S3101 is optional, and one or more of these steps may be omitted or substituted in different embodiments. In some embodiments, step S3102 is optional, and one or more of these steps may be omitted or substituted in different embodiments.

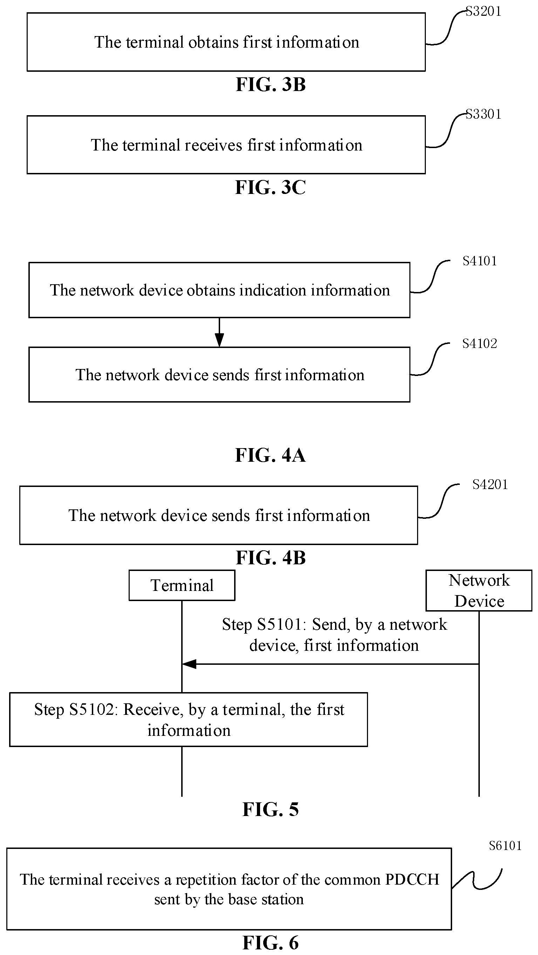

FIG. 3B is a flowchart illustrating an information processing method according to an embodiment of the present disclosure, applied to a terminal. As shown in FIG. 3B, the embodiments of the present disclosure relate to an information processing method, which includes:
**Step S3201:** The terminal obtains first information.

The optional implementation of step S3201 can be found in step S2104 of FIG. 2, step S3101 of FIG. 3A, and other related parts in the embodiments involved in FIG. 2 and FIG. 3A, which will not be repeated here.

FIG. 3C is a flowchart illustrating an information processing method according to an embodiment of the present disclosure, applied to a terminal. As shown in FIG. 3C, the embodiments of the present disclosure relate to an information processing method, which includes:
**Step S3301:** The terminal receives first information.

The optional implementation of step S3301 can be found in step S2104 of FIG. 2, step S3101 of FIG. 3A, and step S3201 of FIG. 2 and FIG. 3B, and other related parts in the embodiments involved in FIG. 2, FIG. 3A, and FIG. 3B, which will not be repeated here.

FIG. 4A is a flowchart illustrating an information processing method according to an embodiment of the present disclosure, applied to a network device. As shown in FIG. 4A, the present disclosure relates to an information processing method, which includes:
**Step S4101:** The network device obtains indication information.

The optional implementation of step S4101 can be found in step S2102 of FIG. 2 and other related parts in the embodiment involved in FIG. 2, which will not be repeated here.

In some embodiments, the network device sends a first command to the terminal, but is not limited thereto; it may also send the first command to other entities.

**Step S4102:** The network device sends the first information.

The optional implementation of step S4102 can be found in step S2103 of FIG. 2 and other related parts in the embodiment involved in FIG. 2, which will not be repeated here.

In some embodiments, the network device sends the first information to the terminal, but is not limited thereto; it may also send the first information to other entities.

The communication method involved in the embodiments of this disclosure may include at least one of steps S4101 to S4102. For example, step S4101 may be implemented as a separate embodiment, and step S4102 may be implemented as a separate embodiment, but are not limited thereto.

In some embodiments, step S4101 is optional, and one or more of these steps may be omitted or substituted in different embodiments.

In some embodiments, step S4102 is optional, and one or more of these steps may be omitted or substituted in different embodiments.

FIG. 4B is a flowchart illustrating an information processing method according to an embodiment of the present disclosure, applied to a network device. As shown in FIG. 4B, the present disclosure relates to an information processing method, which includes:
**Step S4201:** The network device sends first information.

The optional implementation of step S4201 can be found in step S2103 in FIG. 2, step S4101 in FIG. 4A, and other related parts in the embodiments involved in FIG. 2 and FIG. 4, which will not be repeated here.

FIG. 5 is a flowchart illustrating an information processing method according to an embodiment of the present disclosure. As shown in FIG. 5, the present disclosure relates to an information processing method, which includes:
**Step S5101:** Send, by a network device, first information.
**Step S5102:** Receive, by a terminal, the first information.

The optional implementation of step S5101 can be found in step S2103 in FIG. 2, step S4101 in FIG. 4A, and other related parts in the embodiments involved in FIG. 2 and FIG. 4, which will not be repeated here.

The optional implementation of step S5102 can be found in step S2104 of FIG. 2, step S3101 of FIG. 3A, and step S3201 of FIG. 2 and FIG. 3B, and other related parts in the embodiments involved in FIG. 2, FIG. 3A, and FIG. 3B, which will not be repeated here.

In some embodiments, the above methods may include the methods of the embodiments described above on the communication system side, terminal side, network device side, etc., which will not be repeated here.

FIG. 6 is a flowchart illustrating an information processing method according to an embodiment of the present disclosure. As shown in FIG. 6, the present disclosure relates to an information processing method, which includes:
**Step S6101:** The terminal receives a repetition factor of the common PDCCH sent by the base station.

In some embodiments, one repetition factor N is indicated in SIB1.

In some embodiments, the common PDCCH repetition is enabled/disabled in the SIB1, and the number is a predefined number of times M. In the case of enable, the number of repetitions is M.

In some embodiments, in the absence of a dedicated PDCCH configuration, the terminal receives the repetitions of the common PDCCH according to the number of repetitions indicated in SIB1. The information transmitted using the common PDCCH includes at least msg2 DCI and msg4 DCI, with msg2 DCI scrambled by RA-RNTI and msg4 DCI scrambled by TC-RNTI.

In some embodiments, the terminal indicates in the PRACH whether the common PDCCH repetition is required or whether it has the capability to receive the common PDCCH repetition.

In some embodiments, the terminal determines that there is no dedicated PDCCH configuration and the terminal has the ability to receive common PDCCH repetitions, or the terminal requests receiving common PDCCH repetitions, the terminal receives common PDCCH according to the number of repetitions indicated in SIB1.

In some embodiments, the time-domain resources for N repeated transmissions of the common PDCCH are determined as follows:

Optionally, the terminal receives repetitions of common PDCCH on N consecutive slots; optionally, the time-domain resources occupied by the N repetitions are the same in each slot.

In some embodiments, for DCI scrambled by TC-RNTI, common PDCCH repetition is used, and the time offset included in the DCI is calculated from the last transmission. The time offset refers to the time interval between the slot where the last received DCI is located and the starting slot of the PDSCH scheduled by the network device using the PDCCH.

In the embodiments disclosed herein, some or all of the steps and their optional implementations may be arbitrarily combined with some or all of the steps in other embodiments, or may be arbitrarily combined with the optional implementations in other embodiments.

The embodiments of the present disclosure further provide an apparatus for implementing any of the above methods. For example, an apparatus is provided, comprising units or modules for implementing each step performed by a terminal in any of the above methods. For another example, another apparatus is provided, comprising units or modules for implementing each step performed by a network device (e.g., an access network device, a core network function node, a core network device, etc.) in any of the above methods.

It should be understood that the division of the various units or modules in the above-mentioned apparatus is merely a division of logical functions. In actual implementation, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor may be, for example, a general-purpose processor, such as a central processing unit (CPU) or a microprocessor, and the memory may be internal to the apparatus or external to the apparatus. Alternatively, the units or modules in the apparatus may be implemented in the form of hardware circuits, and the functions of some or all of the units or modules may be realized by designing the hardware circuits. The hardware circuits may be understood as one or more processors. For example, in one implementation, the hardware circuits may be an application-specific integrated circuit (ASIC), and the functions of some or all of the units or modules may be realized by designing the logical relationships between the components within the circuits. In another implementation, the hardware circuits may be implemented by programmable logic devices (PLDs), such as field programmable gate arrays (FPGAs), which may include a large number of logic gate circuits. The connections between the logic gate circuits may be configured through configuration files, thereby realizing the functions of some or all of the units or modules. All units or modules of the above devices may be implemented entirely by a processor calling software, entirely by hardware circuits, or partially by a processor calling software, with the remainder implemented by hardware circuits.

In the embodiments of the present disclosure, a processor is a circuit with signal processing capabilities. In one implementation, the processor can be a circuit with capabilities of reading and executing instructions, such as a central processing unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented as an application-specific integrated circuit (ASIC) or a programmable logic device (PLD), such as an FPGA. In a reconfigurable hardware circuit, the process of the processor loading a configuration file and implementing the hardware circuit configuration can be understood as the process of the processor loading instructions to implement the functions of some or all of the above units or modules. Furthermore, the processor can also be a hardware circuit designed for artificial intelligence, which can be understood as an ASIC, such as a neural network processing unit (NPU), a tensor processing unit (TPU), a deep learning processing unit (DPU), etc.

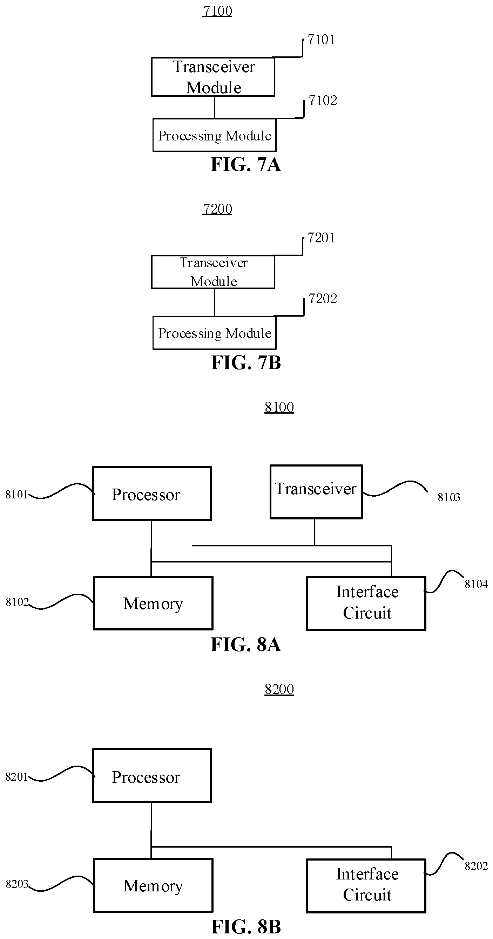

FIG. 7A is a schematic diagram of the terminal structure proposed in an embodiment of this disclosure. As shown in FIG. 7A, the terminal 7100 may include at least one of a transceiver module 7101, a processing module 7102, etc. In some embodiments, the transceiver module 7101 is used to receive first information, the first information being used to indicate the number of repetitions of a first channel, the first channel including a common physical downlink control channel. Optionally, the transceiver module is used to perform at least one of the communication steps (e.g., steps S2102, S2105, but not limited thereto) performed by the terminal 101 in any of the above methods, which will not be described in detail here. Optionally, the processing module is used to perform at least one of the other steps (e.g., step S2106) performed by the terminal 101 in any of the above methods, which will not be described in detail here.

Optionally, the processing module 7101 is used to perform at least one of the communication steps, such as the processing performed by the terminal in any of the above methods, which will not be described in detail here.

FIG. 7B is a schematic diagram of the structure of a network device proposed in an embodiment of this disclosure. As shown in FIG. 7B, the network device 7200 may include at least one of a transceiver module 7201, a processing module 7202, etc. In some embodiments, the transceiver module 7201 is used to transmit first information, the first information being used to indicate the number of repetitions of a first channel, the first channel including a common physical downlink control channel. Optionally, the transceiver module is used to perform at least one of the communication steps (such as step S2101, step S2103, step S2104, but not limited thereto) performed by the network device 102 in any of the above methods, which will not be described in detail here.

Optionally, the processing module 7201 is used to perform at least one of the communication steps, such as the processing performed by the network device in any of the above methods, which will not be described in detail here.

In some embodiments, the transceiver module may include a transmitting module and/or a receiving module, which may be separate or integrated. Optionally, the transceiver module may be interchangeable with a transceiver.

In some embodiments, the processing module may be a single module or may include multiple sub-modules. Optionally, the multiple sub-modules may each perform all or part of the steps required by the processing module. Optionally, the processing module may be interchangeable with a processor.

FIG. 8A is a schematic diagram of the structure of the communication device 8100 proposed in an embodiment of this disclosure. The communication device 8100 can be a network device (e.g., access network device, core network device, etc.), a terminal (e.g., user equipment, etc.), a chip, chip system, or processor that supports the network device in implementing any of the above methods, or a chip, chip system, or processor that supports the terminal in implementing any of the above methods. The communication device 8100 can be used to implement the methods described in the above method embodiments; for details, please refer to the descriptions in the above method embodiments.

As shown in FIG. 8A, the communication device 8100 includes one or more processors 8101. The processor 8101 can be a general-purpose processor or a dedicated processor, such as a baseband processor or a central processing unit (CPU). The baseband processor can be used to process communication protocols and communication data, while the CPU can be used to control communication devices (e.g., base stations, baseband chips, terminal devices, terminal device chips, DUs or CUs, etc.), execute programs, and process program data. The communication device 8100 is used to execute any of the above methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the transceivers 8103 perform at least one of the communication steps, such as sending and/or receiving, in the above method (e.g., steps S2101, S2102, S2103, S2104, but not limited thereto).

In some embodiments, a transceiver may include a receiver and/or a transmitter, which may be separate or integrated. Alternatively, the terms transceiver, transceiver unit, transceiver device, and transceiver circuit may be used interchangeably; the terms transmitter, transmitting unit, transmitter device, and transmitting circuit may be used interchangeably; and the terms receiver, receiving unit, receiver device, and receiving circuit may be used interchangeably.

In some embodiments, the communication device 8100 may include one or more interface circuits 8104. Optionally, the interface circuit 8104 is connected to the memory 8102, and the interface circuit 8104 can be used to receive signals from the memory 8102 or other devices, and can be used to send signals to the memory 8102 or other devices. For example, the interface circuit 8104 can read instructions stored in the memory 8102 and send the instructions to the processor 8101.

The communication device 8100 described in the above embodiments may be a network device or a terminal, but the scope of the communication device 8100 described in this disclosure is not limited thereto, and the structure of the communication device 8100 may not be limited by FIG. 8A. The communication device may be a standalone device or may be part of a larger device. For example, the communication device may be: 1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; and (6) others, etc.

FIG. 8B is a schematic diagram of the structure of the chip 8200 proposed in an embodiment of this disclosure. For cases where the communication device 8100 can be a chip or a chip system, please refer to the schematic diagram of the chip 8200 shown in FIG. 8B, but it is not limited thereto.

The chip 8200 includes one or more processors 8201, which are used to perform any of the above methods.

In some embodiments, the chip 8200 further includes one or more interface circuits 8202. Optionally, the interface circuit 8202 is connected to memory 8203, and the interface circuit 8202 can be used to receive signals from memory 8203 or other devices, and the interface circuit 8202 can be used to send signals to memory 8203 or other devices. For example, the interface circuit 8202 can read instructions stored in memory 8203 and send the instructions to processor 8201.

In some embodiments, the interface circuit 8202 performs at least one of the communication steps, such as sending and/or receiving, in the above method, and the processor 8201 performs at least one of the other steps.

In some embodiments, the terms interface circuit, interface, transceiver pin, transceiver, etc., can be used interchangeably.

In some embodiments, the chip 8200 further includes one or more memories 8203 for storing instructions. Optionally, all or part of the memories 8203 may be located outside of the chip 8200.

This disclosure also proposes a storage medium storing instructions that, when executed on a communication device 8100, cause the communication device 8100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a temporary storage medium.

This disclosure also provides a program product that, when executed by the communication device 8100, causes the communication device 8100 to perform any of the above methods. Optionally, the program product is a computer program product.

This disclosure also proposes a computer program that, when run on a computer, causes the computer to perform any of the above methods.

## Claims

1. An information processing method, comprising:
receiving first information, the first information being used to indicate a number of repetitions of a first channel, wherein the first channel comprises a common physical downlink control channel.

2. The method according to claim 1, wherein the first information comprises a first parameter, the first parameter indicating the number of repetitions of the first channel.

3. The method according to claim 1, wherein the first information comprises a second parameter, the second parameter indicating whether the first channel is enabled for repetitions, and the number of repetitions of the first channel is predefined.

4. The method according to any one of claims 1 to 3, further comprising:
a terminal having no valid second channel, receiving the first channel or receiving second information carried on the first channel based on the number of repetitions of the first channel.

5. The method according to claim 4, further comprising:
the terminal having no valid second channel, and the terminal supporting repetitions of the first channel, receiving the first channel or receiving second information carried on the first channel based on the number of repetitions of the first channel.

6. The method according to claim 4, further comprising:
the terminal having no valid second channel, and the terminal requesting for repetitions of the first channel, receiving the first channel or receiving second information carried on the first channel based on the number of repetitions of the first channel.

7. The method according to any one of claims 4 to 6, wherein the second information comprises at least one of the following:
a downlink control information (DCI) scrambled by random access radio network temporary identity (RA-RNTI);
a DCI scrambled by temporary cell radio network temporary identity (TC-RNTI);
a DCI scrambled by RNTI in two-step random access (msgB-RNTI); or
a DCI scrambled by cell access radio network temporary identity (C-RNTI).

8. The method according to any one of claims 4 to 6, wherein the second channel is a dedicated physical downlink control channel (PDCCH).

9. The method according to any one of claims 1 to 8, wherein the first information is carried in a system message block (SIB).

10. The method according to any one of claims 1 to 9, wherein time-domain resources for the repetitions of the first channel are first number of continuous slots, and wherein the first number is same as the number of repetitions of the first channel;
and/or,
the repetitions of the first channel are transmitted on a plurality of slots, and each repetition of the first channel occupies same time-domain resources in each slot of the plurality of slots.

11. The method according to any one of claims 1 to 10, wherein third information is carried on the first channel, the third information being used to indicate a time offset value, the time offset value indicating a time interval between a time unit at which a last transmission of the repetition of the first channel received by a terminal ends and a time unit at which a third channel begins.

12. The method according to any one of claims 1 to 11, further comprising:
sending fourth information, the fourth information being configured to indicate that the terminal supports repetitions of the first channel.

13. The method according to any one of claims 1 to 11, further comprising:
sending fifth information, the fifth information being configured to indicate that the terminal requests for repetitions of the first channel.

14. The method according to any one of claims 1 to 13, wherein the first channel is a common PDCCH, and/or the first channel is a common PDSCH.

15. An information processing method, comprising:
sending first information, the first information being used to indicate a number of repetitions of a first channel, wherein the first channel comprises a common physical downlink control channel.

16. The method according to claim 15, wherein the first information comprises a first parameter, the first parameter indicating the number of repetitions of the first channel.

17. The method according to claim 15, wherein the first information comprises a second parameter, the second parameter indicating whether the first channel is enabled for repetitions, and the number of repetitions of the first channel is predefined.

18. The method according to any one of claims 15 to 17, further comprising:
a terminal having no valid second channel, sending the first channel or sending second information carried on the first channel based on the number of repetitions of the first channel.

19. The method according to claim 18, further comprising:
the terminal having no valid second channel, and the terminal supporting repetitions of the first channel, sending the first channel or sending second information carried on the first channel based on the number of repetitions of the first channel.

20. The method according to claim 18, further comprising:
the terminal having no valid second channel, and the terminal requesting for repetitions of the first channel, sending the first channel or sending second information carried on the first channel based on the number of repetitions of the first channel.

21. The method according to any one of claims 18 to 20, wherein the second information comprises at least one of the following:
a downlink control information (DCI) scrambled by random access radio network temporary identity (RA-RNTI);
a DCI scrambled by temporary cell radio network temporary identity (TC-RNTI);
a DCI scrambled by RNTI in two-step random access (msgB-RNTI); or
a DCI scrambled by cell access radio network temporary identity (C-RNTI).

22. The method according to any one of claims 18 to 20, wherein the second channel is a dedicated physical downlink control channel (PDCCH).

23. The method according to any one of claims 15 to 22, wherein the first information is carried in a system message block (SIB).

24. The method according to any one of claims 15 to 23, wherein time-domain resources for the repetitions of the first channel are first number of continuous slots, and wherein the first number is same as the number of repetitions of the first channel;
and/or,
the repetitions of the first channel are transmitted on a plurality of slots, and each repetition of the first channel occupies same time-domain resources in each slot of the plurality of slots.

25. The method according to any one of claims 15 to 24, wherein third information is carried on the first channel, the third information being used to indicate a time offset value, the time offset value indicating a time interval between a time unit at which a last transmission of the repetition of the first channel received by a terminal ends and a time unit at which a third channel begins.

26. The method according to any one of claims 15 to 25, further comprising:
receiving fourth information, the fourth information being configured to indicate that the terminal supports repetitions of the first channel.

27. The method according to any one of claims 15 to 25, further comprising:
receiving fifth information, the fifth information being configured to indicate that the terminal requests for repetitions of the first channel.

28. The method according to any one of claims 15 to 27, wherein the first channel is a common PDCCH, and/or the first channel is a common PDSCH.

29. An information processing method, comprising:
sending, by a network device, first information, the first information being used to indicate a number of repetitions of a first channel, wherein the first channel comprises a common physical downlink control channel; and
receiving, by a terminal, the first information.

30. A terminal, comprising:
a transceiver module, configured to receive first information, the first information being used to indicate a number of repetitions of a first channel, wherein the first channel comprises a common physical downlink control channel.

31. A network device, comprising:
a transceiver module, configured to send first information, the first information being used to indicate a number of repetitions of a first channel, wherein the first channel comprises a common physical downlink control channel.

32. A terminal, comprising:
one or more processors;
wherein the terminal is configured to execute the information processing method according to any one of claims 1 to 14.

33. A network device, comprising:
one or more processors;
wherein the network device is configured to execute the information processing method according to any one of claims 15 to 28.

34. A communication system, comprising a terminal and a network device, wherein the terminal is configured to implement the information processing method according to any one of claims 1 to 14, and the network device is configured to implement the information processing method according to any one of claims 15 to 28.

35. A storage medium storing instructions, wherein when the instructions are executed on a communication device, causes the communication device to perform the information processing method according to any one of claims 1 to 14, or perform the information processing method according to any one of claims 15 to 28.
